# EUROPEAN PATENT SPECIFICATION

(11) **EP 4 230 316 B1**
(45) Date of publication and mention of the grant of the patent: **04.11.2026**
(21) Application number: 22865872.0
(22) Date of filing: 09.09.2022
(51) Int. Cl.: B08B 7/00, B08B 13/00, B23K 26/06, B23K 26/362

(54) **APPLICATION OF LASER WITH ANNULAR LIGHT SPOT TO CLEANING OF RIDGE-GROOVE STRUCTURE**
VERWENDUNG EINES RINGPUNKTLASERS ZUR REINIGUNG EINER KONKAV-KONVEX-RILLENSTRUKTUR
APPLICATION D'UN LASER AYANT UN POINT LUMINEUX ANNULAIRE POUR NETTOYER UNE STRUCTURE À RAINURE ET À CRÊTE

(30) Priority: 06.01.2022 CN 202210008950
(43) Date of publication of application: 23.08.2023
(73) Proprietor: Wuhan Raycus Fiber Laser Technologies Co., Ltd, East Lake Hi-Tech Development Zone Wuhan, Hubei 430000 (CN)
(72) Inventor: XIE, Chunbo, Wuhan, Hubei 430000 (CN); WANG, Jun, Wuhan, Hubei 430000 (CN); LIU, Yahui, Wuhan, Hubei 430000 (CN); ZHANG, Chunfang, Wuhan, Hubei 430000 (CN); GAO, Hui, Wuhan, Hubei 430000 (CN); YAN, Dapeng, Wuhan, Hubei 430000 (CN)
(74) Representative: Maiwald GmbH
(86) International application number: PCT/CN2022/118215
(87) International publication number: WO 2023/130757

(56) References cited:
- CN-A- 110 116 117
- CN-A- 113 020 129
- CN-A- 113 522 887
- CN-A- 114 247 706
- CN-B- 108 291 337
- CN-U- 209 680 715
- JP-A- 2015 217 427
- JP-A- S58 159 514

## Description

### TECHNICAL FIELD

The present disclosure relates to the technical field of lasers, and in particular, to use of a ring spot laser in cleaning a concave-convex groove structure.

### BACKGROUND

A mechanical component is usually machined to form a concave-convex groove structure with a groove depth under 1 millimeter, so as to improve performance of the mechanical component and to enhance application capability of the mechanical component. For example, the concave-convex groove structure can be applied to a gun barrel. The gun barrel is a pipe for launching projectiles, and an inner wall of the gun barrel is machined to form the concave-convex groove structure, that is, rifling. The rifling has a function of enabling a warhead to rotate, so that the warhead can maintain a smooth flight in an originally set direction after being discharged from the gun barrel, thereby increasing the penetration force and improving the shooting accuracy. A large amount of residues of sulfide, carbide, oil and the like will be left on the inner wall of the gun barrel after a projectile is launched. With the huge force generated when a projectile is launched, the residues accumulated in the rifling may cause cracks and concave-convex pits to be formed on the inner wall of the gun barrel, thus reducing the shooting accuracy. In severe cases, the gun barrel may even be scrapped or bursted. As another example, the concave-convex groove structure can be applied to a grid roller. The grid roller is commonly used in printing industry, and residues formed on its surface, if not cleaned off in time, may affect the printing quality. Therefore, it is necessary to clean the concave-convex groove structure to remove substances attached to the surface of the concave-convex groove structure.

Chemical cleaning is a conventional cleaning technology. A surface after chemical cleaning is of high cleanliness. However, chemical cleaning is of low cleaning efficiency and of poor environmental friendliness. Laser cleaning is increasingly used (see document CN 209 680 715 U), due to high cleaning efficiency and high environmental friendliness, in cleaning fields, such as removing an oxide layer on a metal surface, polishing a plating on a metal surface, and polishing a metal surface to adjust its size. However, the existing laser cleaning is generally directed to substances attached to a flat surface. For substances attached to a surface of a concave-convex groove structure, since the groove structure has an uneven substrate, the existing laser cleaning may easily lead to unclean cleaning or damage to the substrate despite cleaning.

Accordingly, there is a need to provide a laser cleaning method applicable to a concave-convex groove structure.

### TECHNICAL PROBLEM

The technical problem to be solved comprises how to provide a laser cleaning method applicable to a concave-convex groove structure.

### TECHNICAL SOLUTIONS

Embodiments of the present disclosure provide use of a ring spot laser in cleaning a concave-convex groove structure, so as to clean off, by the ring spot laser, contaminants attached to the concave-convex groove structure with a groove depth under 1 millimeter.

In accordance with the invention, a method for laser cleaning a concave-convex groove structure as defined in claim 1 is provided.

In some embodiments, the pulse laser light has an optical power of 240 W to 300 W; the continuous laser light has an optical power of 960 W to 1280 W; the pulse laser light has a pulse frequency of 20 kHz to 30 kHz; the pulse laser light has a pulse width of 80 nanoseconds to 200 nanoseconds; and the laser beam has a scanning rate of 5000 mm/sec to 8000 mm/sec.

It can be understood that a maximum output power of the pulse laser is Pₘₐₓ₁; a maximum output power of the continuous laser is Pₘₐₓ₂; a current output power of pulse laser, that is, an optical power emitted by the pulse laser light, may be 80% *Pₘₐₓ₁ to 100% *Pₘₐₓ₁; and a current output power of the continuous laser, that is, an optical power emitted by the continuous laser light, may be 60% *Pₘₐₓ₂ to 80% *Pₘₐₓ₂. When the value of Pₘₐₓ₁ is 300 W, and the value of Pₘₐₓ₂ is 1600 W, the optical power emitted by the pulse laser light may be 240 W to 300 W, and the optical power emitted by the continuous laser light may be 960 W to 1280 W.

In some embodiments, the pulse laser light has an optical power of 243 W to 297 W; the continuous laser light has an optical power of 1008 W to 1232 W; the pulse laser light has a pulse frequency of 22.5 kHz to 27.5 kHz; the pulse laser light has a pulse width of 120 nanoseconds to 150 nanoseconds; and the laser beam has a scanning rate of 5850 mm/sec to 7150 mm/sec.

In some embodiments, the laser beam has a spot overlap ratio of 40% to 60%. The spot overlap ratio is difined as a value obtained by quotienting an overlap area of the first spot and the second spot with an area of the spot of the laser beam. It can be understood that the spot overlap ratio is difined as a degree of overlap of a focused spot during movement, the focused spot being formed by collimating and focusing of the laser beam that is formed by combining the pulse laser light with the continuous laser light. The spot overlap ratio is adjusted, so that energy density of the spot of the laser beam is greater than the energy threshold of a contamination layer attached to a surface of a concave-convex groove structure and less than the energy threshold of a substrate of a concave-convex groove structure.

In some embodiments, the laser beam has a spot overlap ratio of 45% to 55%. It can be understood that overlap of the first spot and the second spot is used to increase the energy density of the spot of the laser beam. On the one hand, only when the energy density of the spot of the laser beam exceeds a lower limit of the energy threshold of the contamination layer attached to the surface of the concave-convex groove structure, the contamination layer attached to the surface of the concave-convex groove structure can be peeled off. When the spot overlap ratio is 40%, the energy density of the spot of the laser beam is approximately equal to the lower limit of the energy threshold of the contamination layer attached to the surface of the concave-convex groove structure. On the other hand, if the spot overlap ratio of the laser beam is too high, and the energy density of the spot of the laser beam exceeds an upper limit of the energy threshold value of the substrate surface of the concave-convex groove structure, thereby causing damage to the substrate surface. When the spot overlap ratio is 60%, the energy density of the spot of the laser beam is approximately equal to the lower limit of the energy threshold value of the substrate surface attached to the concave-convex groove structure.

In some embodiments, before the laser beam is collimated and focused, the spot of the laser beam has a diameter of 300 µm, the first spot formed by the pulse laser light has a diameter of 100 µm; and the second spot formed by the continuous laser light has an inner diameter of 130 µm and an outer diameter of 300 µm.

In some embodiments, after the laser beam is collimated and focused, the pulse laser light is combined with the continuous laser light to form a combined beam spot having a diameter of 60 µm to 270 µm.

In some embodiments, the laser beam is collimated by a collimating mirror and focused by a focusing mirror; a focal length of the collimating mirror is 50 mm, 75 mm or 90 mm; and a focal length of the focusing mirror is 100 mm, 160 mm, 170 mm, 175 mm, 180 mm, 200 mm or 254 mm. It can be understood that the ring spot laser comprises a laser optical fiber for emitting a laser light. A laser optical fiber includes a pulse optical fiber and a continuous optical fiber. The pulse optical fiber is used for emitting a pulse laser light. The continuous optical fiber is used for emitting a continuous laser light. An laser optical fiber includes an inner layer and an outer layer. The pulse optical fiber is the inner layer of the laser optical fiber, the continuous optical fiber is an outer layer of the laser optical fiber, and the continuous optical fiber is wrapped around the pulse optical fiber. Diameter of an overlapping spot can be calculated by d=D*f₁*f₂, wherein the diameter of the overlapping spot is d, the diameter of the laser optical fiber is D, the focal length of the collimating mirror is f₁, and the focal length of the focusing mirror is f₂. It can be understood that the focal length of collimating mirror is preferably 75 mm. The focal length of the focusing mirror is preferably 175 mm. Understandably, the laser beam is collimated and focused, so that the laser beam acts on substances in the contamination layer that are not easy to expand and gasify, causing the substances to generate plasma gas.

In some embodiments, before the laser beam is collimated and focused, the spot of the laser beam has a diameter of 400 µm, the first spot formed by the pulse laser light has a diameter of 150 µm, and the second spot formed by the continuous laser light has an inner diameter of 200 µm and an outer diameter of 400 µm.

In some embodiments, after the laser beam is collimated and focused, the pulse laser light is combined with the continuous laser light to form a combined beam spot having a diameter of 44 µm to 132 µm.

In some embodiments, the laser beam is collimated by a collimating mirror and focused by a focusing mirror; a focal length of the collimating mirror is 50 mm, 75 mm or 90 mm; and a focal length of the focusing mirror is 100 mm, 160 mm, 170 mm, 175 mm, 180 mm, 200 mm or 254 mm.

In some embodiments, an incident angle of the laser beam on a surface of the concave-convex groove structure ranges from 10 degrees to 20 degrees. It can be understood that when the laser beam is vertically incident on the surface of the concave-convex groove structure, that is, when the incident angle of the laser beam incident on the surface of the concave-convex groove structure is 0 degree, the surface of the concave-convex groove structure reflects a part of the laser light in the laser beam to form a reflected light, and the reflected light will be focused by the focusing mirror to form an incident light with high energy density, which will be irradiated on the optical lens, thereby causing damage to optical lens. When the incident angle of the laser beam incident on the surface of the concave-convex groove structure is gradually increased from 0 degree, the laser light irradiated on the optical lens in the reflected light gradually decreases. When the incident angle of the laser beam incident on the surface of the concave-convex groove structure is increased to 10 degrees, the laser light irradiated on the optical lens in the reflected light is further reduced to be insufficient to damage the optical lens. When the incident angle of the laser beam incident on the surface of the concave-convex groove structure exceeds 20 degrees, absorption rate of the concave-convex groove structure to the laser light decreases rapidly. Therefore, by adjusting the incident angle of the laser beam on the surface of the concave-convex groove structure to a rage from 10 degrees to 20 degrees, the optical lens can be prevented from being damaged by the reflected light of the laser beam, and the concave-convex groove structure can maintain a high absorption rate to the laser beam.

In some embodiments, a maximum output power of the pulse laser is Pₘₐₓ₁, and an optical power emitted by the pulse laser light of the pulse laser may be 80% *Pₘₐₓ₁ to 100% *Pₘₐₓ₁.

In some embodiments, a maximum output power of the continuous laser is Pₘₐₓ₂, and an optical power emitted by the continuous laser light of the continuous laser may be 60% *Pₘₐₓ₂ to 80% *Pₘₐₓ₂.

### BENEFICIAL EFFECTS

In embodiments of the present disclosure:
1. A ring spot laser is used to clean a concave-convex groove structure with a groove depth of sub-millimeters, that is, under 1 mm, so as to remove the contamination layer attached to the surface of the concave-convex groove structure without damaging the substrate of the concave-convex groove structure.
2. A laser beam having a first spot and a second spot is emitted by a ring spot laser. The first spot is a spot formed by a pulse laser light, and the second spot is a spot formed by a continuous laser light. The first spot and the second spot are overlapped to form a spot of the laser beam. By adjusting optical parameters of the pulse laser light and optical parameters of the continuous laser light, energy of the spot of the laser beam is uniformly distributed.
   When the laser beam irradiates on the surface of the concave-convex groove structure, the surface of the concave-convex groove structure that is irradiated by the laser beam simultaneously absorbs energy of the pulse laser light and energy of the continuous laser light. The first spot formed by the pulse laser light and the second light spot formed by the continuous laser light act together on an area of the contamination layer of the surface of the concave-convex groove structure, wherein the second spot causes the contamination layer attached to the surface of the concave-convex groove structure to expand and gasify, form plasma gas, and carbonize and decompose; and a shock pulse wave formed by the first spot strips the residue after carbonization and decomposition from the substrate of the concave-convex groove structure.
3. By adjusting the optical parameters of the laser beam, the energy density of the spot of the laser beam is adjusted to an energy threshold of the contamination layer attached to the surface of the concave-convex groove structure, which is lower than an energy threshold of the substrate of the concave-convex groove structure. The energy threshold of the contaminant layer on the surface of the concave-convex groove structure can be understood as the highest value of energy required for decomposition reaction of substances contained in the contaminant layer. The energy threshold of the substrate of the concave-convex groove structure can be understood as the lowest value of energy required for chemical reaction of substances contained in the substrate of the concave-convex groove structure.

When the energy density of the spot of the laser beam is higher than the energy threshold value of the contamination layer attached to the surface of the concave-convex groove structure, the contamination layer attached to the surface of the concave-convex groove structure absorbs the energy of the spot of the laser beam and is decomposed and peeled off. When the energy density of the spot of the laser beam is lower than the energy threshold value of the substrate of the concave-convex groove structure, the substrate of the concave-convex groove structure does not undergo a chemical reaction and thus is not damaged.

### BRIEF DESCRIPTION OF THE DRAWINGS

In order to more clearly describe the technical solutions in embodiments of the present disclosure, hereinafter, the appended drawings used for describing the embodiments will be briefly introduced. Apparently, the appended drawings described below are only directed to some embodiments of the present disclosure, and for a person skilled in the art, without expenditure of creative labor, other drawings can be derived on the basis of these appended drawings.
FIG. 1 is an optical path diagram of a ring spot laser according to an embodiment of the present disclosure.
FIG. 2 is a schematic cross-sectional diagram of a laser optical fiber of a ring spot laser according to an embodiment of the present disclosure.
FIG. 3 is a schematic structural diagram of a first spot and a second spot formed by a laser beam before being collimated and focused, that is emitted by a ring spot laser, according to an embodiment of the present disclosure.
FIG. 4 is a schematic structural diagram of a combined beam spot formed by a laser beam after being collimated and focused, that is emitted by a ring spot laser.

### DETAILED DESCRIPTION OF EMBODIMENTS

Hereinafter, technical solutions in embodiments of the present disclosure will be clearly and completely described with reference to the accompanying drawings in embodiments of the present disclosure.

In description of the present application, it should be understood that the terms "first", "second" are used for descriptive purposes only and cannot be understood as indicating or implying relative importance or implicitly indicating the number of indicated technical features.

Existing lasers include pulse lasers, continuous lasers, and ring spot lasers. A pulse laser generates a pulse laser light. A continuous laser generates a continuous laser light. A ring spot laser generates both a pulse laser light and a continuous laser light. Ring spot lasers are commonly used in laser welding.

As the ring spot laser, a model of Ray-P300-C1500 from Raycus is selected.

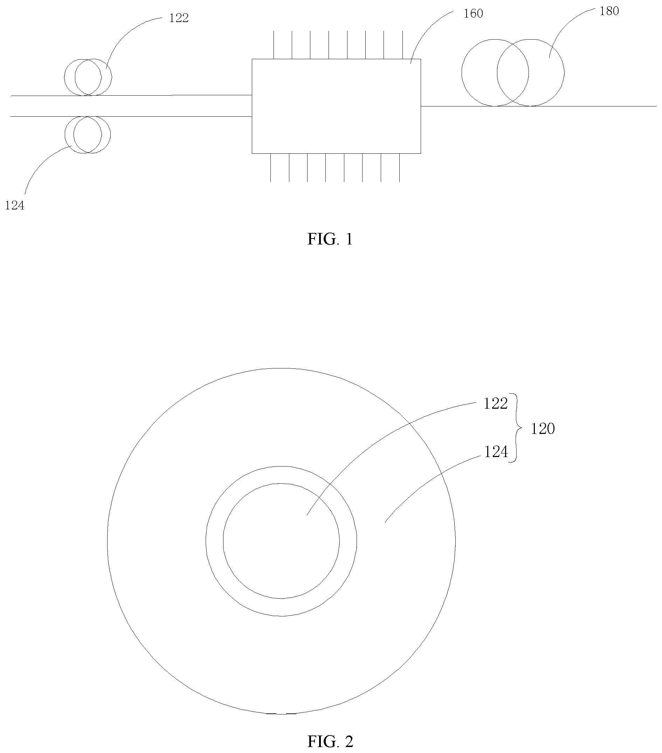

Referring to FIGs. 1 and 2, the ring spot laser includes a laser optical fiber 120 for emitting laser light. The laser optical fiber includes a pulse optical fiber 122 and a continuous optical fiber 124. The pulse optical fiber 122 is used to emit pulse laser light. The continuous optical fiber 124 is used to emit a continuous laser light. The ring spot laser also includes a beam combiner 160 and a combined optical fiber 180. The pulse laser light and continuous laser light form a laser beam through a beam combiner 160, which is conducted through the combined optical fiber 180.

Referring to FIG. 2, the laser optical fiber 120 includes an inner layer and an outer layer. The pulse optical fiber 122 is the inner layer of the laser optical fiber 120, the continuous optical fiber 124 is the outer layer of the laser optical fiber 120, and the continuous optical fiber 124 is wrapped around the pulse optical fiber 122.

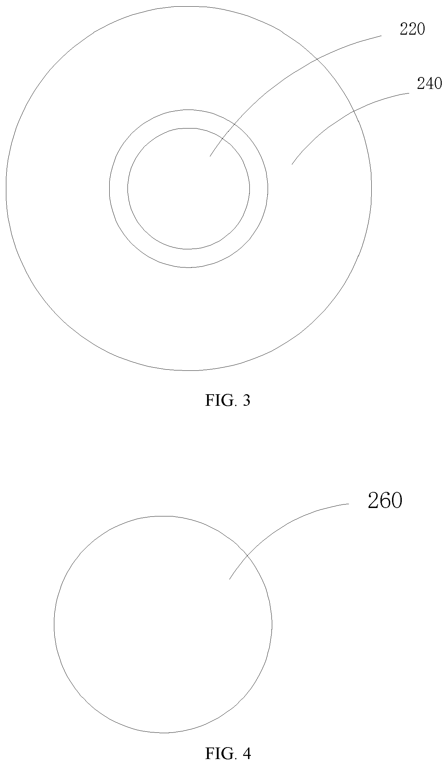

Referring to FIG. 3, the laser beam forms a first spot 220 and a second spot 240 before being collimated and focused.

Referring to FIG. 4, the laser beam forms a combined beam spot 260 after being collimated and focused.

The cleaning objects are gun barrel and grid rollers. The cleaning part of the gun barrel is an inner wall of the gun barrel, namely rifling of the gun barrel. The main cleaning part of the grid roller is an outer wall of the grid roller. Both the inner wall of the gun barrel and the outer wall of the grid roller are surfaces with concave-convex groove structures. Modle of the gun barrel is follows: a caliber of 120 mm. Modle of the grid roller is follows: a length of 80 cm, a width of 60 cm, a height of 70 cm, and a weight of 200 kg.

For convenience of description, in the following description, the gun barrel and the grid roller are referred to as objects to be cleaned. The inner wall of the gun barrel and the outer wall of the grid roller are referred to as surfaces to be cleaned.

The optical parameters of the laser beam include: optical power of the pulse laser light and optical power of a continuous laser light; pulse frequency of the pulse laser light and pulse width of the pulse laser light; scanning rate of the laser beam; spot overlap ratio of the laser beam; size of a combined beam spot formed after the laser beam is collimated and focused; focal length of the focusing mirror; focal length of the collimating mirror; and incident angle of laser beam.

By adjusting the optical power of the pulse laser light and the optical power of the continuous laser light; and the pulse frequency of the pulse laser light and the pulse width of the pulse laser light, energy of the laser beam can be adjusted, so as to expand and gasify the contaminated layer laser beam attached to the surface of the concave-convex groove structure under the action of the laser beam.

By adjusting the scanning rate of the laser beam, energy absorption of the laser beam by the contamination layer attached to the surface of the concave-convex groove structure per unit time can be adjusted.

By adjusting the spot overlap ratio of the laser beam, the energy density of the spot of the laser beam is higher than the energy threshold of the contamination layer attached to the surface of the concave-convex groove structure, and lower than the energy threshold of the substrate of the concave-convex groove structure.

Size of a combined beam spot formed after the laser beam is collimated and focused: the larger the size of the combined beam spot, the larger the area of the surface of the concave-convex groove structure scanned by the combined beam spot per unit time.

The focal length of the focusing mirror and the focal length of the collimating mirror are adjusted, so that the laser beam acts on substances in the contamination layer that are not easy to expand and gasify, causing the substances to generate plasma gas. Understandably, some contaminants are easy to expand and gasify, so there is no need to generate plasma gas at this time in this case.

Incident angle of the laser beam: the incident angle of the laser beam on a surface of the concave-convex groove structure is adjusted to a suitable range, so as to protect the optical lens from being damaged by the reflected light of the laser beam, and maintain a high absorption rate of the concave-convex groove structure to the laser light.

### Embodiment 1

The pulse laser light has an optical power of 240 W. The continuous laser has an optical power of 960 W. The pulse laser light has a pulse frequency of 20 kHz and a pulse width of 80 nanoseconds. The laser beam has a scanning rate of 5000 mm/sec. The laser beam has a spot overlap ratio of 40%. Before the laser beam is collimated and focused: the spot of the laser beam has a diameter of 300 µm, the first spot formed by the pulse laser light has a diameter of 100 µm; and the second spot formed by the continuous laser light has an inner diameter of 130 µm and an outer diameter of 300 µm. After the laser beam is collimated and focused: the pulse laser light is combined with the continuous laser light to form a combined beam spot having a diameter of 132 µm. The laser beam is collimated by a collimating mirror and focused by a focusing mirror. The focal length of the collimating mirror is 75 mm. The focal length of the focusing mirror is 170 mm. The incident angle of the laser beam on the surface of the concave-convex groove structure is 10 degrees.

Cleaning efficiency of the surface of the concave-convex groove structure is measured. The cleaning efficiency is defined as the area of the surface of the concave-convex groove structure cleaned per unit time. The measurement results of the gun barrel are shown in table 1. The measurement results of the grid rolls are shown in table 2.

Roughness test and smoothness test are carried out on the surface of the cleaned concave-convex groove structures. The instrument used in the roughness test is SJ-210 of Mitutoyo. The instrument used in the smoothness test is CS-380 of CHN Spec. The measurement results of the gun barrel are shown in table 1. The measurement results of the grid rolls are shown in table 2.

### Embodiment 2

The pulse laser light has an optical power of 300 W. The continuous laser has an optical power of 1280 W. The pulse laser light has a pulse frequency of 30 kHz and a pulse width of 200 nanoseconds. The laser beam has a scanning rate of 8000 mm/sec. The laser beam has a spot overlap ratio of 60%. Before the laser beam is collimated and focused: the spot of the laser beam has a diameter of 400 µm, the first spot formed by the pulse laser light has a diameter of 150 µm; and the second spot formed by the continuous laser light has an inner diameter of 200 µm and an outer diameter of 400 µm. After the laser beam is collimated and focused: the pulse laser light is combined with the continuous laser light to form a combined beam spot having a diameter of 125 µm. The laser beam is collimated by a collimating mirror and focused by a focusing mirror. The focal length of the collimating mirror is 50 mm. The focal length of the focusing mirror is 160 mm. The incident angle of the laser beam on the surface of the concave-convex groove structure is 20 degrees.

Cleaning efficiency of the surface of the concave-convex groove structure is measured. The cleaning efficiency is defined as the area of the surface of the concave-convex groove structure cleaned per unit time. The measurement results of the gun barrel are shown in table 1. The measurement results of the grid rolls are shown in table 2.

Roughness test and smoothness test are carried out on the surface of the cleaned concave-convex groove structures. The instrument used in the roughness test is SJ-210 of Mitutoyo. The instrument used in the smoothness test is CS-380 of CHN Spec. The measurement results of the gun barrel are shown in table 1. The measurement results of the grid rolls are shown in table 2.

### Embodiment 3

The pulse laser light has an optical power of 243 W. The continuous laser has an optical power of 1008 W. The pulse laser light has a pulse frequency of 22.5 kHz and a pulse width of 100 nanoseconds. The laser beam has a scanning rate of 5850 mm/sec. The laser beam has a spot overlap ratio of 45%. Before the laser beam is collimated and focused: the spot of the laser beam has a diameter of 300 µm, the first spot formed by the pulse laser light has a diameter of 100 µm; and the second spot formed by the continuous laser light has an inner diameter of 130 µm and an outer diameter of 300 µm. After the laser beam is collimated and focused: the pulse laser light is combined with the continuous laser light to form a combined beam spot having a diameter of 106 µm. The laser beam is collimated by a collimating mirror and focused by a focusing mirror. The focal length of the collimating mirror is 90 mm. The focal length of the focusing mirror is 254 mm. The incident angle of the laser beam on the surface of the concave-convex groove structure is 15 degrees.

Cleaning efficiency of the surface of the concave-convex groove structure is measured. The cleaning efficiency is defined as the area of the surface of the concave-convex groove structure cleaned per unit time. The measurement results of the gun barrel are shown in table 1. The measurement results of the grid rolls are shown in table 2.

Roughness test and smoothness test are carried out on the surface of the cleaned concave-convex groove structures. The instrument used in the roughness test is SJ-210 of Mitutoyo. The instrument used in the smoothness test is CS-380 of CHN Spec. The measurement results of the gun barrel are shown in table 1. The measurement results of the grid rolls are shown in table 2.

### Embodiment 4

The pulse laser light has an optical power of 297 W. The continuous laser has an optical power of 1232 W. The pulse laser light has a pulse frequency of 27.5 kHz and a pulse width of 154 nanoseconds. The laser beam has a scanning rate of 7150 mm/sec. The laser beam has a spot overlap ratio of 55%. Before the laser beam is collimated and focused: the spot of the laser beam has a diameter of 400 µm, the first spot formed by the pulse laser light has a diameter of 150 µm; and the second spot formed by the continuous laser light has an inner diameter of 200 µm and an outer diameter of 400 µm. After the laser beam is collimated and focused: the pulse laser light is combined with the continuous laser light to form a combined beam spot having a diameter of 187 µm. The laser beam is collimated by a collimating mirror and focused by a focusing mirror. The focal length of the collimating mirror is 75 mm. The focal length of the focusing mirror is 160 mm. The incident angle of the laser beam on the surface of the concave-convex groove structure is 15 degrees.

Cleaning efficiency of the surface of the concave-convex groove structure is measured. The cleaning efficiency is defined as the area of the surface of the concave-convex groove structure cleaned per unit time. The measurement results of the gun barrel are shown in table 1. The measurement results of the grid rolls are shown in table 2.

Roughness test and smoothness test are carried out on the surface of the cleaned concave-convex groove structures. The instrument used in the roughness test is SJ-210 of Mitutoyo. The instrument used in the smoothness test is CS-380 of CHN Spec. The measurement results of the gun barrel are shown in table 1. The measurement results of the grid rolls are shown in table 2.

### Embodiment 5 (Comparative Example)

The pulse laser is used for generating a pulse laser light.

Model of the pulse laser is: P1000W. Optical parameters of the pulse laser are as follows: frequency is 20 KHz; and optical power is 1000 W.

Cleaning efficiency of the surface of the concave-convex groove structure is measured. The cleaning efficiency is defined as the area of the surface of the concave-convex groove structure cleaned per unit time. The measurement results of the gun barrel are shown in table 1. The measurement results of the grid rolls are shown in table 2.

Roughness test and smoothness test are carried out on the surface of the cleaned concave-convex groove structures. The instrument used in the roughness test is SJ-210 of Mitutoyo. The instrument used in the smoothness test is CS-380 of CHN Spec. The measurement results of the gun barrel are shown in table 1. The measurement results of the grid rolls are shown in table 2.

### Embodiment 6 (Comparative Example)

The continuous laser is used for generating a continuous laser light.

Model of the continuous laser is: C2000W. Optical parameter of the continuous laser is as follows: optical power is 2000 W.

Cleaning efficiency of the surface of the concave-convex groove structure is measured. The cleaning efficiency is defined as the area of the surface of the concave-convex groove structure cleaned per unit time. The measurement results of the gun barrel are shown in table 1. The measurement results of the grid rolls are shown in table 2.

Roughness test and smoothness test are carried out on the surface of the cleaned concave-convex groove structures. The instrument used in the roughness test is SJ-210 of Mitutoyo. The instrument used in the smoothness test is CS-380 of CHN Spec. The measurement results of the gun barrel are shown in table 1. The measurement results of the grid rolls are shown in table 2.

### Embodiment 7 (Comparative Example)

The ring spot laser is used for generating both a pulse laser light and a continuous laser light. Ring spot lasers are commonly used in laser welding.

Model of the ring spot laser is: Ray-P300-C1500.

Pulse optical parameter is as follows: power is 300 W; and frequency is 20 KHz.

Continuous optical parameter is as follows: power is 1200 W; and scanning speed of galvanometer is 6000 mm/s.

The incident angle of the laser beam on the surface of the concave-convex groove structure is 15 degrees.

Cleaning efficiency of the surface of the concave-convex groove structure is measured. The cleaning efficiency is defined as the area of the surface of the concave-convex groove structure cleaned per unit time. The measurement results of the gun barrel are shown in table 1. The measurement results of the grid rolls are shown in table 2.

Roughness test and smoothness test are carried out on the surface of the cleaned concave-convex groove structures. The instrument used in the roughness test is SJ-210 of Mitutoyo. The instrument used in the smoothness test is CS-380 of CHN Spec. The measurement results of the gun barrel are shown in table 1. The measurement results of the grid rolls are shown in table 2.

**Table 1 Test data for inner wall of the gun barrel**

| Experiment | Cleaning efficiency ( m²/h ) | Roughness (µm) | Smoothness (GU) |
|---|---|---|---|
| Embodiment 1 | 1.62 | 6.24 | 196 |
| Embodiment 2 | 1.24 | 5.86 | 201 |
| Embodiment 3 | 1.46 | 6.02 | 198 |
| Embodiment 4 | 1.38 | 6.19 | 205 |
| Embodiment 5 | 2.36 | 50.12 | 13 |
| Embodiment 6 | 3.28 | 30.37 | 46 |
| Embodiment 7 | 1.87 | 8.91 | 205 |

The test process of the inner wall of the gun barrel is to slice the gun barrel, and then test the roughness and smoothness of one side of the inner wall of the gun barrel on the slices. Roughness mainly characterizes an unevenness of tiny peaks and valleys of the measured surface. The smoothness is mainly a visual effect that characterizes the flatness of the measured surface. Combination of roughness characterization and smoothness characterization is used to more accurately determine whether the surface of the concave-convex groove structure is cleaned. After many tests, when the roughness is less than 10 µm and the smoothness is greater than 150 GU, the substrate of the inner wall of the gun barrel is completely exposed, and the inner wall of the gun barrel is clean.

In embodiments 1 to 4, for all the slices, when the roughness is less than 10 µm and the smoothness is greater than 150 GU, it indicated that the substrate of the inner wall of the gun barrel is completely exposed and the inner wall of the barrel is clean.

In embodiments 1 to 4, the cleaned inner wall of the gun barrel is compared with the substrate of the inner wall of the gun barrel without a contamination layer, the result shows that there is no color difference, indicating that the substrate of the cleaned inner wall of the barrel is not damaged.

In embodiments 1 to 4, the cleaning efficiency in embodiment 1 is highest in case that the inner wall of the gun barrel is clean.

In embodiment 5, the roughness is greater than 10 µm and the smoothness is less than 150 GU, indicating that the substrate of the cleaned inner wall of the gun barrel is not completely exposed and contaminants are still attached to the inner wall of the gun barrel.

In embodiments 6 and 7, through observation, there are traces of melting on the inner wall of the gun barrel, indicating that the substrate of the inner wall of the gun barrel is damaged by the laser light.

**Table 2 Test data for outer wall of the grid rolls**

| Experiment | Cleaning efficiency ( m²/h ) | Roughness (µm) | Smoothness (GU) |
|---|---|---|---|
| Embodiment 1 | 1.62 | 11.31 | 176 |
| Embodiment 2 | 1.24 | 8.17 | 198 |
| Embodiment 3 | 1.46 | 9.76 | 187 |
| Embodiment 4 | 1.38 | 10.52 | 193 |
| Embodiment 5 | 2.48 | 20.34 | 36 |
| Embodiment 6 | 3.42 | 15.72 | 102 |
| Embodiment 7 | 1.73 | 9.05 | 183 |

The test process of the outer wall of the grid roller is is to slice the grid rollers, and thentest the roughness and smoothness of one side of the inner wall of the grid roller on the slices. Roughness mainly characterizes an unevenness of tiny peaks and valleys of the measured surface. The smoothness is mainly a visual effect that characterizes the flatness of the measured surface. Combination of roughness characterization and smoothness characterization is used to more accurately determine whether the surface of the concave-convex groove structure is cleaned. After many tests, when the roughness is less than 15 µm and the smoothness is greater than 150 GU, the substrate of the outer wall of the grid roller is completely exposed, and the outer wall of the grid roller is clean.

In embodiments 1 to 4, for all the slices, when the roughness is less than 15 µm and the smoothness is greater than 150 GU, it indicated that the substrate of the outer wall of the grid roller is completely exposed and the outer wall of the grid roller is clean.

In embodiments 1 to 4, the cleaned outer wall of the grid roller is compared with the substrate of the outer wall of the grid roller without a contamination layer, the result shows that there is no color difference, indicating that the substrate of the cleaned outer wall of the grid roller is not damaged.

In embodiments 1 to 4, the cleaning efficiency in embodiment 1 is highest in case that the outer wall of the grid roller is clean.

In embodiment 5, the roughness is greater than 15 µm and the smoothness is less than 150 GU, indicating that the substrate of the outer wall of the grid roller is not completely exposed and contaminants are still attached to the outer wall of the grid roller.

In embodiments 6 and 7, through observation, there are traces of melting on the outer wall of the grid roller, indicating that the substrate of the outer wall of the grid roller is damaged by the laser light.

In view of the foregoing, application of the ring spot laser provided in the embodiments of the present disclosure in cleaning a concave-convex groove structure has been described in detail above, and the principles and embodiments of the present disclosure are described by using specific examples herein. Descriptions of the above embodiments are merely intended to help understand the methods and core ideas of the present disclosure.

## Claims

1. A method for cleaning a concave-convex groove structure by using a ring spot laser, comprising a pulse laser for emitting a pulse laser light; a continuous laser for emitting a continuous laser light; and a beam combiner (160) for combining the pulse laser light and the continuous laser light to form a laser beam;
the method comprises:
forming the pulse laser light through the pulse laser;
forming the continuous laser light through the continuous laser;
forming the laser beam by combining the pulse laser light and the continuous laser light through the beam combiner (160); and
moving the laser beam along a scanning path on a surface to be cleaned of the concave-convex groove structure to clean the surface;
wherein a spot of the laser beam formed on the surface comprises:
a first spot (220) formed by the pulse laser light; and
a second spot (240) formed by the continuous laser light; and
wherein the first spot (220) is circular, the second spot (240) is ring shaped, and an outer edge of the second spot (240) surrounds an outer edge of the first spot (220).

2. The method according to claim 1, **characterized in that** the method further comprises subjecting the laser beam to collimating and focusing.

3. The method according to claim 1, **characterized in that** the pulse laser light has an optical power of 240 W to 300 W; the continuous laser light has an optical power of 960 W to 1280 W; the pulse laser light has a pulse frequency of 20 kHz to 30 kHz; the pulse laser light has a pulse width of 80 nanoseconds to 200 nanoseconds; and the laser beam has a scanning rate of 5000 mm/sec to 8000 mm/sec.

4. The method according to claim 3, **characterized in that** the pulse laser light has an optical power of 243 W to 297 W; the continuous laser light has an optical power of 1008 W to 1232 W; the pulse laser light has a pulse frequency of 22.5 kHz to 27.5 kHz; the pulse laser light has a pulse width of 120 nanoseconds to 150 nanoseconds; and the laser beam has a scanning rate of 5850 mm/sec to 7150 mm/sec.

5. The method according to claim 3, **characterized in that** the laser beam has a spot overlap ratio of 40% to 60% or 45% to 55%, and the spot overlap ratio is defined as a degree of overlap of a focused spot during movement, the focused spot being formed by collimating and focusing the laser beam that is formed by combining the pulse laser light with the continuous laser light.

6. The method according to claim 3, **characterized in that**, before the laser beam is collimated and focused, the spot of the laser beam formed on the surface has a diameter of 300 µm, the first spot (220) has a diameter of 100 µm, and the second spot (240) has an inner diameter of 130 µm and an outer diameter of 300 µm, or before the laser beam is collimated and focused, the spot of the laser beam has a diameter of 400 µm, the first spot (220) has a diameter of 150 µm, and the second spot (240) has an inner diameter of 200 µm and an outer diameter of 400 µm.

7. The method according to claim 5 or 6, **characterized in that**, after the laser beam is collimated and focused, the pulse laser light is combined with the continuous laser light to form the focused spot having a diameter of 60 µm to 270 µm or 44 µm to 132 µm.

8. The method according to claim 7, **characterized in that** the laser beam is collimated by a collimating mirror and focused by a focusing mirror; a focal length of the collimating mirror is 50 mm, 75 mm or 90 mm; and a focal length of the focusing mirror is 100 mm, 160 mm, 170 mm, 175 mm, 180 mm, 200 mm or 254 mm.

9. The method according to claim 3, **characterized in that** an incident angle of the laser beam on a surface of the concave-convex groove structure ranges from 10 degrees to 20 degrees.

10. The method according to claim 1, **characterized in that** a maximum output power of the pulse laser is Pₘₐₓ₁, and an optical power of the pulse laser light emitted by the pulse laser may be 80% *Pₘₐₓ₁ to 100% *Pₘₐₓ₁, or
a maximum output power of the continuous laser is Pₘₐₓ₂, and an optical power of the continuous laser light emitted by the continuous laser may be 60% *Pₘₐₓ₂ to 80% *Pₘₐₓ₂.

## Patentansprüche

1. Verfahren zum Reinigen einer konkav-konvexen Rillenstruktur unter Verwendung eines Ringpunktlasers, umfassend: einen Pulslaser zum Emittieren von Pulslaserlicht; einen Dauerstrichlaser zum Emittieren von Dauerstrichlaserlicht; und einen Strahlkombinator (160) zum Kombinieren des Pulslaserlichts und des Dauerstrichlaserlichts, um einen Laserstrahl zu bilden;
das Verfahren umfasst:
das Erzeugen des Pulslaserlichts durch den Pulslaser;
Erzeugen des Dauerstrichlaserlichts durch den Dauerstrichlaser;
Erzeugen des Laserstrahls durch Kombinieren des Pulslaserlichts und des Dauerstrichlaserlichts mittels des Strahlkombinators (160); und
Bewegen des Laserstrahls entlang einer Abtastbahn auf einer zu reinigenden Oberfläche der konkav-konvexen Rillenstruktur, um die Oberfläche zu reinigen;
wobei ein auf der Oberfläche erzeugter Fleck des Laserstrahls umfasst: einen ersten Fleck (220), der durch das Pulslaserlicht erzeugt wird; und
einen zweiten Fleck (240), der durch das Dauerstrichlaserlicht erzeugt wird; und
wobei der erste Fleck (220) kreisförmig ist, der zweite Fleck (240) ringförmig ist,
und ein Außenrand des zweiten Flecks (240) einen Außenrand des ersten Flecks (220) umgibt.

2. Verfahren nach Anspruch 1, **dadurch gekennzeichnet, dass** das Verfahren ferner das Kollimieren und Fokussieren des Laserstrahls umfasst.

3. Verfahren nach Anspruch 1, **dadurch gekennzeichnet, dass** das Pulslaserlicht eine optische Leistung von 240 W bis 300 W aufweist; das Dauerstrichlaserlicht eine optische Leistung von 960 W bis 1280 W aufweist; das Pulslaserlicht eine Pulsfrequenz von 20 kHz bis 30 kHz aufweist; das Pulslaserlicht eine Pulsbreite von 80 Nanosekunden bis 200 Nanosekunden aufweist; und der Laserstrahl eine Abtastrate von 5000 mm/s bis 8000 mm/s aufweist.

4. Verfahren nach Anspruch 3, **dadurch gekennzeichnet, dass** das Pulslaserlicht eine optische Leistung von 243 W bis 297 W aufweist; das Dauerstrichlaserlicht eine optische Leistung von 1008 W bis 1232 W aufweist; das Pulslaserlicht eine Pulsfrequenz von 22,5 kHz bis 27,5 kHz aufweist; das
Pulslaserlicht eine Pulsbreite von 120 Nanosekunden bis 150 Nanosekunden aufweist; und der Laserstrahl eine Abtastrate von 5850 mm/s bis 7150 mm/s aufweist.

5. Verfahren nach Anspruch 3, **dadurch gekennzeichnet, dass** der Laserstrahl ein Spotüberlappungsverhältnis von 40 % bis 60 % oder 45 % bis 55 % aufweist, wobei das Spotüberlappungsverhältnis definiert ist als
Grad der Überlappung eines fokussierten Spots während der Bewegung, wobei der fokussierte Spot durch Kollimieren und Fokussieren des Laserstrahls gebildet wird, der durch Kombinieren des Pulslaserlichts mit dem Dauerstrichlaserlicht entsteht.

6. Verfahren nach Anspruch 3, **dadurch gekennzeichnet, dass** vor der Kollimation und Fokussierung des Laserstrahls der auf der Oberfläche gebildete Laserstrahlfleck einen
Durchmesser von 300 µm aufweist, der erste Fleck (220) einen Durchmesser von 100 µm aufweist und der zweite Fleck
(240) einen Innendurchmesser von 130 µm und einen Außendurchmesser von 300 µm aufweist, oder
bevor der Laserstrahl kollimiert und fokussiert wird, der auf der Oberfläche gebildete Laserstrahlfleck einen
Durchmesser von 400 µm aufweist, der erste Fleck (220) einen Durchmesser von 150 µm aufweist und der zweite Fleck (240) einen Innendurchmesser von 200 µm und einen Außendurchmesser von 400 µm aufweist.

7. Verfahren nach Anspruch 5 oder 6, **dadurch gekennzeichnet, dass**, nachdem der Laserstrahl kollimiert und fokussiert wurde, das Pulslaserlicht mit dem Dauerstrichlaserlicht kombiniert wird, um den fokussierten Fleck mit einem Durchmesser von 60 µm bis 270 µm oder 44 µm bis 132 µm zu bilden.

8. Verfahren nach Anspruch 7, **dadurch gekennzeichnet, dass** der Laserstrahl durch einen Kollimatorspiegel kollimiert und durch einen Fokussierspiegel fokussiert wird; die Brennweite des Kollimatorspiegels 50 mm, 75 mm oder 90 mm beträgt; und die Brennweite des Fokussierspiegels 100 mm, 160 mm, 170 mm, 175 mm, 180 mm, 200 mm oder 254 mm beträgt.

9. Verfahren nach Anspruch 3, **dadurch gekennzeichnet, dass** der Einfallswinkel des Laserstrahls auf eine Oberfläche der konkav-konvexen Rillenstruktur im Bereich von 10 Grad bis 20 Grad liegt.

10. Verfahren nach Anspruch 1, **dadurch gekennzeichnet, dass** die maximale Ausgangsleistung des Pulslasers Pmax1 beträgt und die optische Leistung des vom Pulslaser emittierten Pulslaserlichts 80 % *Pmax1 bis 100 % *Pmax1 betragen kann, oder
die maximale Ausgangsleistung des Dauerstrichlasers Pmax2 beträgt und die optische Leistung des vom Dauerstrichlaser emittierten Dauerstrichlaserlichts zwischen 60 % *Pmax2 und 80 % *Pmax2 liegen kann.

## Revendications

1. Procédé de nettoyage d'une structure à rainures concaves-convexes à l'aide d'un laser à spot annulaire, comprenant : un laser pulsé destiné à émettre une lumière laser pulsée ; un laser continu destiné à émettre une lumière laser continue ; et un combineur de faisceaux (160) destiné à combiner la lumière laser pulsée et la lumière laser continue pour former un faisceau laser ;
le procédé comprend :
la génération de la lumière laser pulsée par le laser pulsé ;
la génération de la lumière laser continue à l'aide du laser continu ;
la formation du faisceau laser par combinaison de la lumière laser pulsée et de la lumière laser continue à l'aide du combineur de faisceaux (160) ; et
le déplacement du faisceau laser le long d'une trajectoire de balayage sur une surface à nettoyer de la structure à rainures concaves-convexes afin de nettoyer ladite surface ;
dans lequel un spot du faisceau laser formé sur la surface comprend : un premier spot (220) formé par la lumière laser pulsée ; et
un deuxième spot (240) formé par la lumière laser continue ; et
dans lequel le premier spot (220) est circulaire, le deuxième spot (240) est en forme d'anneau,
et un bord extérieur du deuxième spot (240) entoure un bord extérieur du premier spot (220).

2. Procédé selon la revendication 1, **caractérisé en ce qu'**il comprend en outre les étapes consistant à soumettre le faisceau laser à une collimation et à une focalisation.

3. Procédé selon la revendication 1, **caractérisé en ce que** la lumière laser pulsée a une puissance optique comprise entre 240 W et 300 W ; la lumière laser continue a une puissance optique comprise entre 960 W et 1 280 W ; la lumière laser pulsée a une fréquence d'impulsion comprise entre 20 kHz et 30 kHz ; la lumière laser pulsée a une largeur d'impulsion comprise entre 80 nanosecondes et 200 nanosecondes ; et le faisceau laser a une vitesse de balayage comprise entre 5 000 mm/s et 8 000 mm/s.

4. Procédé selon la revendication 3, **caractérisé en ce que** la lumière laser pulsée a une puissance optique comprise entre 243 W et 297 W ; la lumière laser continue a une puissance optique comprise entre 1 008 W et 1 232 W ; la lumière laser pulsée a une fréquence d'impulsion comprise entre 22,5 kHz et 27,5 kHz ; la lumière laser pulsée a une largeur d'impulsion comprise entre 120 nanosecondes et 150 nanosecondes ; et le faisceau laser a une vitesse de balayage comprise entre 5 850 mm/s et 7 150 mm/s.

5. Procédé selon la revendication 3, **caractérisé en ce que** le faisceau laser présente un taux de chevauchement des spots compris entre 40 % et 60 % ou entre 45 % et 55 %, ce taux de chevauchement étant défini comme le
degré de chevauchement d'un spot focalisé pendant le déplacement, le spot focalisé étant formé par collimation et focalisation du faisceau laser issu de la combinaison de la lumière laser pulsée et de la lumière laser continue.

6. Procédé selon la revendication 3, **caractérisé en ce que**, avant que le faisceau laser ne soit
collimaté et focalisé, le spot du faisceau laser formé sur la surface présente un diamètre de 300 µm, le premier spot (220) présente un diamètre de 100 µm, et le deuxième spot (240) a un diamètre intérieur de 130 µm et un diamètre extérieur de 300 µm, ou
avant que le faisceau laser ne soit collimaté et focalisé, le spot du faisceau laser a un diamètre de 400 µm, le premier spot (220) a un diamètre de 150 µm, et le deuxième spot (240) a un diamètre intérieur de 200 µm et un diamètre extérieur de 400 µm.

7. Procédé selon la revendication 5 ou 6, **caractérisé en ce que**, après que le faisceau laser a été collimaté et focalisé, la lumière laser pulsée est combinée à la lumière laser continue pour former le spot focalisé ayant un diamètre compris entre 60 µm et 270 µm ou entre 44 µm et 132 µm.

8. Procédé selon la revendication 7, **caractérisé en ce que** le faisceau laser est collimaté par un miroir de collimation et focalisé par un miroir de focalisation ; la distance focale du miroir de collimation est de 50 mm, 75 mm ou 90 mm ; et la distance focale du miroir de focalisation est de 100 mm, 160 mm, 170 mm, 175 mm, 180 mm, 200 mm ou 254 mm.

9. Procédé selon la revendication 3, **caractérisé en ce que** l'angle d'incidence du faisceau laser sur une surface de la structure à rainures concaves-convexes est compris entre 10 degrés et 20 degrés.

10. Procédé selon la revendication 1, **caractérisé en ce que** la puissance de sortie maximale du laser pulsé est Pmax1, et la puissance optique de la lumière laser pulsée émise par le laser pulsé peut être comprise entre 80 % *Pmax1 et 100 % *Pmax1, ou la puissance de sortie maximale du laser continu est Pmax2, et la puissance optique de la lumière laser continue émise par le laser continu peut être comprise entre 60 % *Pmax2 et 80 % *Pmax2.
